(19)

**Europäisches Patentamt**
**European Patent Office**
**Office européen des brevets**

(11) **EP 4 567 008 A1**

(12) **EUROPEAN PATENT APPLICATION**
published in accordance with Art. 153(4) EPC

(43) Date of publication:
**11.06.2025 Bulletin 2025/24**

(21) Application number: **23850049.0**

(22) Date of filing: **31.07.2023**

(51) International Patent Classification (IPC):
**C03B 23/023** [(2006.01)]   **C03C 21/00** [(2006.01)]
**C03C 27/04** [(2006.01)]   **G09F 9/00** [(2006.01)]
**G09F 9/30** [(2006.01)]

(52) Cooperative Patent Classification (CPC):
**C03B 23/023; C03C 21/00; C03C 27/04;**
**G09F 9/00; G09F 9/30**

(86) International application number:
**PCT/JP2023/027972**

(87) International publication number:
**WO 2024/029495 (08.02.2024 Gazette 2024/06)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **03.08.2022 JP 2022123808**

(71) Applicant: AGC INC.
**Chiyoda-ku,**
**Tokyo 1008405 (JP)**

(72) Inventors:
• **WATANABE Toshinari**
  **Tokyo 100-8405 (JP)**
• **INOUE Yasuhiro**
  **Tokyo 100-8405 (JP)**
• **INOUE Atsushi**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS ARTICLE, DISPLAY DEVICE, METHOD FOR MANUFACTURING GLASS ARTICLE, AND METHOD FOR MANUFACTURING DISPLAY DEVICE**

(57) The present invention inhibits cover glass from deviating from a desired shape. A glass article (10) according to the present invention has: heat-molded cover glass (12) including a curved part (20); a frame (14) provided to a main surface (12B) of the cover glass (12); and an adhesive layer (16) which is provided between the main surface (12B) of the cover glass (12) and the frame (14) and adhesively joins the cover glass (12) and the frame (14), wherein the parameter A stated in the specification is greater than 0 and equal to or less than 0.5.

[FIG. 4]

**EP 4 567 008 A1**

**Description**

TECHNICAL FIELD

The present invention relates to a glass article, a display device, a glass article production method, and a display device production method.

BACKGROUND ART

A liquid crystal display or an organic EL display may be used in an on-vehicle display device or the like that displays information necessary for driving or the like. In such a display, a cover glass may be disposed to protect a front surface. In recent years, an interior of a vehicle is required to have high designability, and a cover glass having a curved surface shape is required. For example, Patent Literature 1 discloses a curved display device including a protective member as a cover glass, a frame, and a display panel. In order to curve the cover glass, there is known a hot forming method in which the cover glass is curved while being heated.

CITATION LIST

PATENT LITERATURE

Patent Literature 1: JP6941930B

SUMMARY OF INVENTION

TECHNICAL PROBLEM

However, when the cover glass is curved by, for example, hot forming, the shape of the cover glass may deviate from a desired curved shape. Therefore, it is required to suppress deviation of the cover glass from the desired shape.
The present invention has been made in view of the above problem, and an object thereof is to provide a glass article, a display device, a glass article production method, and a display device production method, which are capable of suppressing deviation of a cover glass from a desired shape.

SOLUTION TO PROBLEM

A glass article according to the present disclosure is a glass article including: a cover glass that is hot-formed and includes a curved portion; a frame provided on a main surface of the cover glass; and an adhesive layer provided between the main surface of the cover glass and the frame to adhere the cover glass and the frame, in which a parameter A defined by the following Formula (1) is more than 0 and 0.5 or less.
[Math. 1]

$$A = \exp\left(0.014 E_1 t_1^2 - 0.00020 E_2 I_2 - 0.0053 \sum (E_3\, W) - 2.5\right) + 0.1 \qquad \cdots (1)$$

Where $E_1$ is a Young's modulus (GPa) of the cover glass, $t_1$ is a thickness (mm) of the cover glass, $E_2$ is a Young's modulus (GPa) of the frame, $I_2$ is a moment of inertia of area (mm$^4$) of the frame, $E_3$ is an elastic modulus (MPa) of the adhesive layer, and W is a value obtained by dividing an area (cm$^2$) of the adhesive layer by a length (cm) of the curved portion along a main surface in a direction orthogonal to a bending axis.
A display device according to the present disclosure includes a display and the glass article provided on a surface of the display.
A glass article production method according to the present disclosure includes a step of shaping a cover glass including a curved portion by curving a glass plate while heating the glass plate, and a step of adhering a main surface of the cover glass to a frame via an adhesive layer to produce a glass article.
A display device production method according to the present disclosure includes a step of attaching the glass article to a display, thereby producing a display device.

ADVANTAGEOUS EFFECTS OF INVENTION

According to the present invention, deviation of a cover glass from a desired shape can be suppressed.

BRIEF DESCRIPTION OF DRAWINGS

[FIG. 1] FIG. 1 is a schematic diagram illustrating a display device according to the present embodiment.
[FIG. 2] FIG. 2 is a schematic diagram of a glass article according to the present embodiment.
[FIG. 3A] FIG. 3A is a top view of a cover glass.
[FIG. 3B] FIG. 3B is a sectional view taken along the line A-A in FIG. 3A.
[FIG. 4] FIG. 4 is a sectional view of the glass article including the cover glass.
[FIG. 5] FIG. 5 is a schematic diagram illustrating a production method of the glass article and the display device according to the present embodiment.
[FIG. 6] FIG. 6 is a diagram illustrating an example in which a plurality of adhesive layers are provided.
[FIG. 7] FIG. 7 is a schematic diagram of a cover glass according to another example of the present embodiment.
[FIG. 8] FIG. 8 is a schematic diagram of a cover glass according to another example of the present embodiment.
[FIG. 9] FIG. 9 is a schematic diagram of a cover glass according to another example of the present embodiment.
[FIG. 10] FIG. 10 is a schematic diagram of a cover glass according to another example of the present embodiment.
[FIG. 11] FIG. 11 is a schematic diagram of a cover glass according to another example of the present embodiment.
[FIG. 12] FIG. 12 is a schematic diagram of a cover glass according to another example of the present embodiment.
[FIG. 13] FIG. 13 is a schematic diagram of a cover glass according to another example of the present embodiment.
[FIG. 14] FIG. 14 is a schematic diagram of a cover glass according to another example of the present embodiment.
[FIG. 15] FIG. 15 is a schematic diagram of a cover glass according to another example of the present embodiment.
[FIG. 16] FIG. 16 is a schematic diagram of a cover glass according to another example of the present embodiment.
[FIG. 17] FIG. 17 is a schematic diagram of a cover glass according to another example of the present embodiment.
[FIG. 18] FIG. 18 is a schematic diagram of a cover glass according to another example of the present embodiment.

DESCRIPTION OF EMBODIMENTS

A preferred embodiment of the present invention will be described below in detail with reference to the accompanying drawings. The present invention is not limited to the embodiment and in the case where there are a plurality of embodiments, also includes a combination of the embodiments. In addition, numerical values include rounding ranges.

(Display Device)

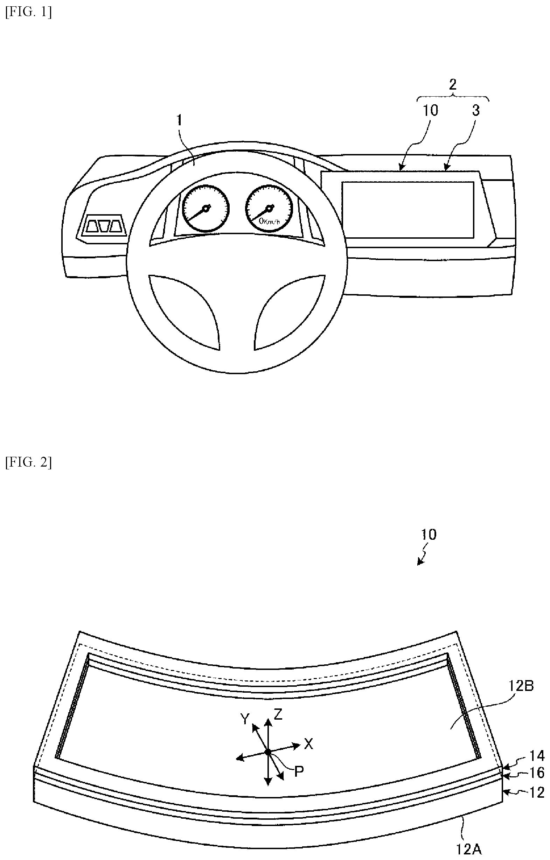

FIG. 1 is a schematic diagram illustrating a display device according to the present embodiment. As illustrated in FIG. 1, a glass article 10 according to the present embodiment is provided in a display device 2, and is used as a cover member for a surface (front surface) of a display 3 on which an image is displayed. In the present embodiment, the display device 2 is an on-vehicle display device provided in a vehicle, and is provided in front of a steering shaft 1 in the vehicle, for example. The display 3 displays a car navigation screen, various meters such as a speed meter, a start button, and the like. However, the configuration of FIG. 1 is an example, and the display device 2 to which the glass article 10 is applied may have any configuration. In addition, the glass article 10 is not limited to being used as a cover member for a surface of the display device 2, and may be used for any application.

(Glass Article)

FIG. 2 is a schematic diagram of the glass article according to the present embodiment. As illustrated in FIG. 2, the glass article 10 includes a cover glass 12, a frame 14, and an adhesive layer 16. The cover glass 12 is a transparent plate-shaped glass member and includes a main surface 12A (first main surface) which is a main surface on one side and a main surface 12B (second main surface) which is a main surface on a side opposite to the main surface 12A. When the glass article 10 is mounted on an object to be mounted such as the display device 2, the main surface 12A becomes a side exposed to the outside, and the main surface 12B becomes a side facing the object to be mounted (here, display 3). The term "transparent" as used herein indicates allowing visible light to be transmitted.

(Frame)

The frame 14 is a frame-like member attached to the main surface 12B of the cover glass 12. The frame 14 is made of, for example, a resin, a metal, or a fiber reinforced plastic, but without being limited thereto, may be formed of any material. The cover glass 12 is curved in an X direction (described later), and the frame 14 is also curved in the X direction along the cover glass 12. The frame 14 is attached to a peripheral edge portion of the main surface 12B of the cover glass 12. In the example of FIG. 2, the frame 14 has a frame shape provided over an entire section of the peripheral edge portion of the main surface 12B of the cover glass 12 in a peripheral direction. In addition, in the example of FIG. 2, an end portion of the cover glass 12 on a peripheral edge side does not protrude from the frame 14, but without being limited thereto, the end portion of the cover glass 12 on the peripheral edge side may protrude from the frame 14. In addition, the shape of the frame 14 and the attachment position of the frame 14 on the main surface 12B are not limited to the above description, and may be any shape and any position. For example, the frame 14 may have a shape that is discontinuous in a partial section of the peripheral edge portion of the main surface 12B in the peripheral direction. That is, for example, in the case where the main surface 12B has a curved rectangular shape, the frame 14 may have a shape provided on three sides among the four sides of the rectangle, a shape provided on two opposing sides, or a shape provided on one side.

(Adhesive Layer)

The frame 14 is fixed (adhered) to the main surface 12B of the cover glass 12 via the adhesive layer 16. The adhesive layer 16 is provided between the frame 14 and the main surface 12B of the cover glass 12 to adhere a surface of the frame 14 on a cover glass 12 side and the main surface 12B of the cover glass 12. The adhesive layer 16 may be formed of any adhesive member capable of adhering the frame 14 and the cover glass 12, such as a double-sided tape or an adhesive.

(Cover Glass)

The cover glass 12 is attached to the frame 14 while being curved. In the present embodiment, the cover glass 12 is hot-formed to achieve a desired shape. A flat plate-shaped glass plate is bent by a hot forming method (thermal shaping method), to become a cover glass 12. The cover glass 12 in a bent state is further bent while unheated and then, attached to the frame 14. That is, the cover glass 12 bent by hot forming is attached to the frame 14 while a bending stress acts thereon due to bending accompanied with elastic deformation by an external force, in a state where the cover glass 12 is not further heated. The term "hot forming" as used herein indicates a method of bending a glass with increasing a temperature thereof to a glass transition point or higher.

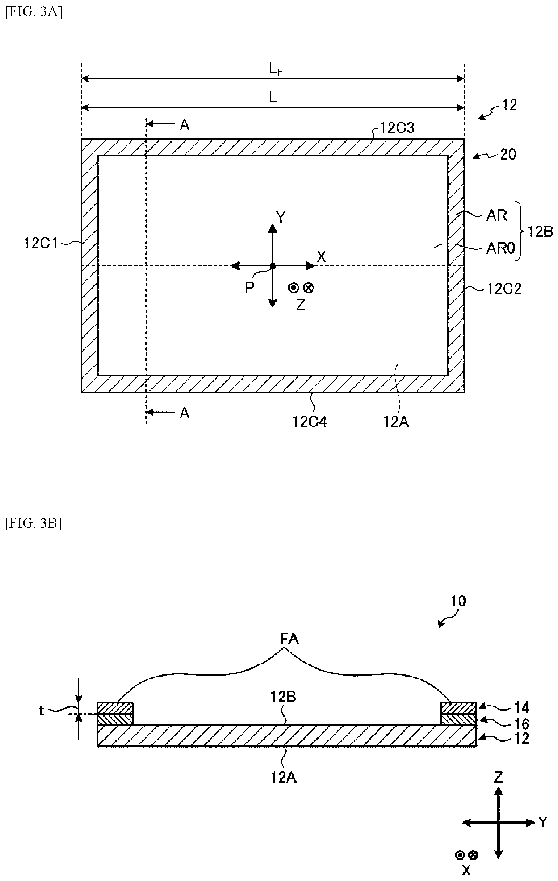

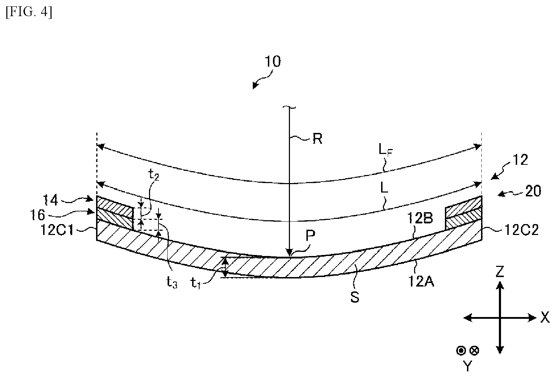

Hereinafter, the shape of the cover glass 12 will be described more specifically. FIG. 3A is a top view of the cover glass, FIG. 3B is a sectional view taken along the line A-A in FIG. 3A, and FIG. 4 is a sectional view of the glass article including the cover glass. In the example of FIG. 3A, the cover glass 12 has a shape in which a rectangular flat plate-shaped glass plate is curved. Hereinafter, one side surface (end surface) of the cover glass 12 is defined as a side surface 12C1, a side surface opposing the side surface 12C1 is defined as a side surface 12C2, another side surface of the cover glass 12 is defined as a side surface 12C3, and a side surface opposing the side surface 12C3 is defined as a side surface 12C4. In the example of FIG. 3A, the side surfaces 12C1 and 12C2 are short sides of the rectangle, and the side surfaces 12C3 and 12C4 are long sides of the rectangle. The cover glass 12 is not limited to a shape in which a rectangular flat plate-shaped glass plate is curved, and may be a shape in which a glass plate having any shape is curved. For example, the cover glass 12 may have a shape in which a polygonal, circular, or elliptical flat plate-shaped glass plate is curved.

FIG. 3A is a view when the cover glass 12 is viewed from a normal direction (Z direction) of a position P on the main surface 12B of the cover glass 12, and FIG. 4 illustrates a section of the cover glass 12 along the X direction. Here, a tangential direction selected so as to satisfy the following conditions among tangential directions of the main surface 12B at an arbitrary point P of the main surface 12B of the cover glass 12 is defined as the X direction (first direction), a direction orthogonal to the X direction among the tangential directions of the main surface 12B at the point P is defined as a Y direction, and a direction orthogonal to the X direction and the Y direction, that is, a normal direction (thickness direction) of the position P is defined as the Z direction. Here, the X direction indicates a direction in which a curvature radius of a line formed by intersection of the main surface 12B and a plane including the tangential direction and the normal direction becomes minimum, among the tangential directions of the main surface 12B at an arbitrary point P of the main surface 12B of the cover glass 12.

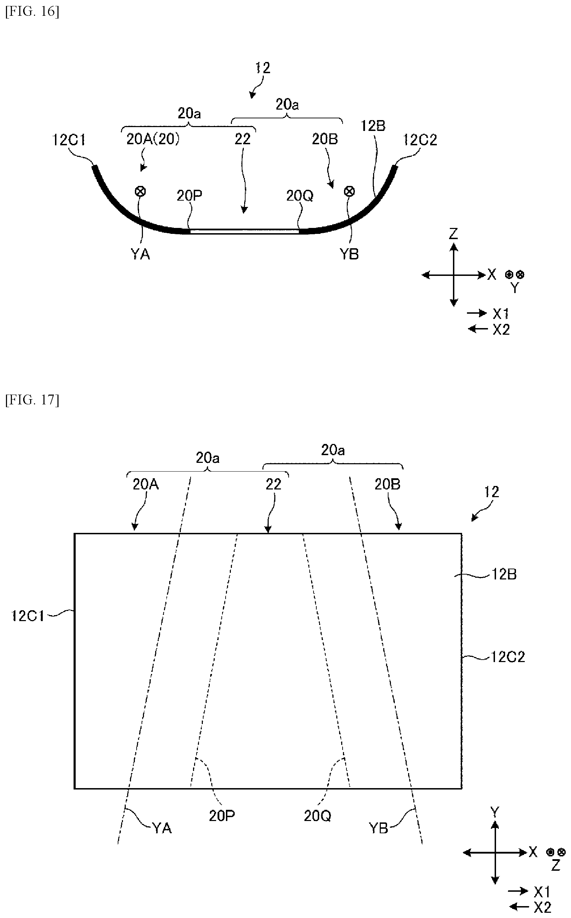

Since the cover glass 12 according to the present embodiment is uniaxially bent, the X direction can be unambiguously defined even when the position P is set to any point. However, as in another example (FIGS. 16 and 17) described later, a plurality of curved portions 20 may be provided, and bending directions of the respective curved portions 20 may intersect with one another. In this case, the X direction may be defined for each curved portion 20. That is, among tangential directions of the position P on one curved portion 20, a direction in which a curvature radius of a line formed by intersection of the main surface 12B and a plane including a tangential direction and a normal direction is minimum may be defined as the X direction of this curved portion 20, and the X direction may be defined in the same manner for each curved portion 20.

In the case where there are a plurality of tangential directions in which a curvature radius of a line formed by intersection of the main surface 12B and a plane including a tangential direction and a normal direction is minimum, at least one direction of the tangential directions may be defined as the X direction.

As illustrated in FIG. 4, in a state where the cover glass 12 is attached to the frame 14, the cover glass 12 is curved with a curvature radius R with the Y direction as a bending axis and the X direction as a direction orthogonal to the bending axis. The curvature radius R can be said to be a curvature radius of a line formed by intersection of the main surface 12B and a plane including the X direction and the Z direction. The curvature radius R of the cover glass 12 (curvature radius of bending with the Y direction as bending axis) is preferably 100 mm or more and 8,000 mm or less, more preferably 300 mm or more and 6,000 mm or less, and still more preferably 500 mm or more and 4,000 mm or less. In the case where the curvature radius R falls within this range, deviation of the cover glass 12 in the glass article from a desired shape can be suppressed while improving the designability.

The curvature radius of bending of the cover glass 12 with the Y direction as a bending axis in a state where the cover glass 12 is detached from the frame 14 is defined as a curvature radius R1. The curvature radius R1 can be said to be a curvature radius of a line formed by intersection of the main surface 12B and the plane including the X direction and the Z direction in a state where the cover glass 12 is detached from the frame 14. In this case, the curvature radius R1 of the cover glass 12 is preferably 50 mm or more and 10,000 mm or less, more preferably 100 mm or more and 8,000 mm or less, and still more preferably 300 mm or more and 6,000 mm or less. In the case where the curvature radius R1 falls within this range, deviation of the cover glass 12 in the glass article from a desired shape can be suppressed while improving the designability. The curvature radius R1 refers to a curvature radius of the cover glass 12 in a state where the cover glass 12 is detached from the frame 14, is not subjected to a load from the outside, and is not elastically deformed by an external load. In this manner, since the cover glass 12 is hot formed, the cover glass 12 is curved even when the cover glass 12 is detached from the frame 14 and not elastically deformed.

More specifically, the cover glass 12 is curved by hot forming the glass plate to achieve a desired shape before the cover glass 12 is attached to the frame 14. At this time, an absolute value of a difference between the curvature radius R1 of the cover glass 12 in a state where the cover glass 12 is detached from the frame 14 and the curvature radius R of the cover glass 12 in a state where the cover glass 12 is attached to the frame 14 is preferably 5% or less of the curvature radius R, and more preferably 2% or less. That is, it is preferable that the cover glass 12 according to the present embodiment is bent by hot forming to a curvature radius close to the final curvature radius R, and accordingly satisfies Formula (1) described later, so that it is easy to suppress deviation of the cover glass in the glass article from a desired shape.

On the other hand, the absolute value of the difference between the curvature radius R1 and the curvature radius R is, for example, more than 0.0% and is 0.2% or more. In the hot forming method, in particular, in a self-weight forming method in which a glass plate is placed on a lower mold and heated to be curved by its own weight, deviation of the shape may occur even when the glass plate is curved to achieve a desired shape. According to the present embodiment, even in such a case, it is possible to prevent the cover glass 12 from deviating from a desired shape when a glass article is produced by using a glass plate as the cover glass 12 and attaching the frame 14.

Further, when the curvature radius of the frame 14 in a state where the cover glass 12 is detached from the frame 14 is defined as R3, the curvature radius R3 (curvature radius of bending with the Y direction as bending axis) is preferably 100 mm or more and 8,000 mm or less, more preferably 300 mm or more and 6,000 mm or less, and still more preferably 500 mm or more and 4,000 mm or less. An absolute value of a difference between the curvature radius R3 and the curvature radius R of the cover glass 12 in a state where the cover glass 12 is attached to the frame 14 is preferably 2% or less, and more preferably 1% or less. In the case where the curvature radius R3 falls within the above range, it is easy to suppress the deviation of the cover glass in the glass article from the desired shape.

The cover glass 12 is preferably not bent in a direction other than a bending direction with the Y direction as a bending axis. The cover glass 12 preferably does not have bending with the X direction as a bending axis. In other words, a trajectory along the Y direction on the main surface 12B of the cover glass 12 is preferably linear. The term "not have bending" is not limited to a case where the curvature radius is infinite, and may include a case where the curvature radius is more than 10,000 mm.

Hereinafter, a portion of the cover glass 12 that is bent with the Y direction as a bending axis is referred to as the curved portion 20. The curved portion 20 indicates a region of the cover glass 12 that is bent with the same curvature radius R with the Y direction as a bending axis. That is, it can be said that the curved portion 20 of the cover glass 12 is bent with the curvature radius R with the Y direction as a bending axis. In the example of FIG. 4, since the entire cover glass 12 is bent with the same curvature radius R in the X direction, it can be said that the entire cover glass 12 is the curved portion 20.

The expression "the curvature radius R is the same" as used herein is not limited to a case where the curvature radius R is strictly the same for each position. For example, when the curvature radius R is measured at each position from an end point on one side to an end point on the other side in the X direction of a region bent with the Y direction as a bending axis on the main surface 12B of the cover glass 12 and the change in the measured curvature radius R is 5% or less, that is, when a difference between a maximum value and a minimum value of the curvature radius R at each position is 5% or less of the maximum value of the curvature radius R at each position, the region is regarded as a region having the same curvature radius and is treated as one curved portion 20. An average value of the curvature radius R at each position of the curved portion 20 may be treated as the curvature radius R of the curved portion 20.

Examples of a method for measuring the curvature radius R and the curvature radius R1 of the cover glass 12 include a method of measuring a shape by using a contact type or non-contact type three-dimensional measuring machine and obtaining the curvature radius based on shape data, and a method of pressing an R ruler against the cover glass 12 and measuring the curvature radius.

In the present embodiment, the curved portion 20 is bent to be convex toward the main surface 12A. However, the curved portion 20 is not limited to being bent to be convex toward the main surface 12A, and may be bent to be convex toward the main surface 12B.

The an arbitrary point P described above is any point in the curved portion 20 of the main surface 12B, and for example, may be a central position of the main surface 12B (for example, position of the center of gravity of the cover glass 12) in the case where a central region of the main surface 12A is the curved portion 20. That is, the X direction and the Y direction may be tangential directions from the center of the main surface 12B, and the Z direction may be a normal direction at the center of the main surface 12B.

(Material of Cover Glass)

A glass material for the cover glass 12 is any material, and for example, an alkali-free glass, a soda-lime glass, a soda-lime silicate glass, an aluminosilicate glass, a borosilicate glass, a lithium aluminosilicate glass, and a borosilicate glass can be used. The cover glass 12 is preferably chemically strengthened, in other words, preferably has a compressive stress layer on a surface thereof. Therefore, the cover glass 12 is preferably an aluminosilicate glass or a lithium aluminosilicate glass to which a large stress is easily introduced by a strengthening treatment even when the thickness is thin and by which a glass with a high strength can be obtained even when the thickness is thin. A chemical strengthening treatment is generally performed by immersing a glass in a molten salt containing alkali metals.

The cover glass 12 preferably contains, in terms of mol% based on oxides, 50% to 80% of $SiO_2$, 0.1% to 25% of $Al_2O_3$, 3% to 30% of $Li_2O+Na_2O+K_2O$, 0% to 25% of MgO, 0% to 25% of CaO, and 0% to 5% of $ZrO_2$, but is not particularly limited thereto. Here, "50% to 80%" as used herein indicates 50% or more and 80% or less when mol% of the total amount of the cover glass 12 is defined as 100%, and other numerical ranges are defined in the same manner. "$Li_2O+Na_2O+K_2O$" indicates the total content of $Li_2O$, $Na_2O$, and $K_2O$. In the case where the cover glass 12 has the following composition, the rigidity can also be appropriately maintained even when the cover glass 12 is curved. A numerical range represented by "to" means a numerical range including numerical values before and after "to" as a lower limit value and an upper limit value, and also means the same meaning when "to" is used thereafter.

More specifically, examples of a more preferable composition of the glass for the cover glass 12 include the following glass compositions. For example, "containing 0% to 25% of MgO" means that MgO is not essential but may be contained up to 25%. The glass of (i) is categorized in soda-lime silicate glass, the glasses of (ii) and (iii) are categorized in aluminosilicate glass, and the glasses of (iv), (v), and (vi) are categorized in lithium aluminosilicate glass.

(i) Glass having a composition containing, in terms of mol%, 63% to 73% of $SiO_2$, 0.1% to 5.2% of $Al_2O_3$, 10% to 16% of $Na_2O$, 0% to 1.5% of $K_2O$, 0% to 5.0% of $Li_2O$, 5% to 18% of MgO, and 1% to 10% of CaO

(ii) Glass having a composition containing, in terms of mol%, 50% to 74% of $SiO_2$, 5% to 15% of $Al_2O_3$, 10% to 20% of $Na_2O$, 0% to 8% of $K_2O$, 0% to 5.0% of $Li_2O$, 2% to 15% of MgO, 0% to 6% of CaO, and 0% to 5% of $ZrO_2$, in which a total content of $SiO_2$ and $Al_2O_3$ is 65% to 85%, a total content of $Na_2O$ and $K_2O$ is 12% to 25%, and a total content of MgO and CaO is 1% to 15%

(iii) Glass having a composition containing, in terms of mol%, 68% to 80% of $SiO_2$, 4% to 10% of $Al_2O_3$, 5% to 15% of $Na_2O$, 0% to 1% of $K_2O$, 0% to 5.0% of $Li_2O$, 4% to 15% of MgO, and 0% to 1% of $ZrO_2$

(iv) Glass having a composition containing, in terms of mol%, 67% to 75% of $SiO_2$, 0% to 4% of $Al_2O_3$, 7% to 15% of $Na_2O$, 1% to 9% of $K_2O$, 0% to 5.0% of $Li_2O$, 6% to 14% of MgO, and 0% to 1.5% of $ZrO_2$, in which a total content of $SiO_2$ and $Al_2O_3$ is 71% to 75%, a total content of $Na_2O$ and $K_2O$ is 12% to 20%, and a content of CaO is less than 1% in the case where CaO is contained

(v) Glass having a composition containing, in terms of mol%, 50% to 73% of $SiO_2$, 5% to 20% of $Al_2O_3$, 0% to 6% of $B_2O_3$, 0% to 10% of $P_2O_5$, 4% to 12% of $Li_2O$, 3% to 20% of $Na_2O$, 0% to 5% of $K_2O$, 0% to 8% of MgO, 0% to 2% of CaO, 0% to 5% of SrO, 0% to 5% of BaO, 0% to 5% of ZnO, 0% to 2% of $TiO_2$, and 0% to 4% of $ZrO_2$

(vi) Glass having a composition containing, in terms of mol%, 58% to 80% of $SiO_2$, 13% to 18% of $Al_2O_3$, 0% to 5% of $B_2O_3$, 0.5% to 4% of $P_2O_5$, 3% to 10% of $Li_2O$, 5% to 20% of $Na_2O$, 0% to 2% of $K_2O$, 0% to 11% of MgO, 0% to 20% of CaO, 0% to 20% of SrO, 0% to 15% of BaO, 0% to 10% of ZnO, 0% to 1% of $TiO_2$, and 0% to 2% of $ZrO_2$

(Parameter A of Glass Article)

Here, when a glass plate is curved by hot forming to achieve a desired curved shape, the shape may deviate from a desired curved shape. On the other hand, in the present embodiment, it is possible to suppress deviation of the cover glass 12 from the desired curved shape when a glass article is produced by hot forming a glass plate to be curved to some extent, and further bending the glass plate in this state by attaching the glass plate to the frame 14. Further, the present inventors have found that the deviation from the desired curved shape can be suitably suppressed by designing the parameter A defined as described later to be within a predetermined numerical range. That is, in the present embodiment, the deviation from a desired curved shape can be suitably suppressed by defining the parameter A of the glass article 10 as follows. Hereinafter, the parameter A will be described.

In the glass article 10, the parameter A represented by the following Formula (1) is 0.5 or less, preferably 0.3 or less, and more preferably 0.1 or less. In the case where the parameter A falls within this range, the deviation from a desired curved shape can be suitably suppressed. The parameter A is more than 0, preferably 0.001 or more, more preferably 0.005 or more, and still more preferably 0.01 or more. That is, it can be said that the parameter A is more than 0 and 0.5 or less, preferably 0.001 or more and 0.5 or less, more preferably 0.005 or more and 0.3 or less, and still more preferably 0.01 or more and 0.1 or less. In the case where the parameter A is 0.5 or less, preferably 0.3 or less, and more preferably 0.1 or less, a value PV to be described later can be 0.5 or less, and the deviation from a desired curved shape can be suitably suppressed, which is preferable.

The value PV of the glass article 10 according to the present embodiment is calculated by the following assumption. First, it is assumed that the glass article 10 and a glass article having a desired curved shape are placed on a horizontal plane without applying an external force. In this state, both shapes are superimposed on each other, a distance in a vertical direction is calculated at a portion where deviation occurs, and a value that is maximum in the entire region is set as the value PV

At this time, the glass article is placed such that a convex surface comes to a horizontal plane side, and in the case where the glass article has both a convex surface and a concave surface, the larger value of a distance in the vertical direction calculated by placing one surface as the horizontal plane side and a distance in the vertical direction calculated by placing the other surface as the horizontal plane side is adopted as the value PV.

[Math. 2]

$$A = \exp\left(0.014E_1 t_1^2 - 0.00020E_2 I_2 - 0.0053 \sum (E_3 W) - 2.5\right) + 0.1 \qquad \cdots (1)$$

Where

E$_1$ is a Young's modulus (GPa) of the cover glass 12,
t$_1$ is a thickness (mm) of the cover glass 12,
E$_2$ is a Young's modulus (GPa) of the frame 14,
I$_2$ is a moment of inertia of area (mm$^4$) of the frame 14,
E$_3$ is an elastic modulus (MPa) of the adhesive layer 16, and
W is a value obtained by dividing an area B (cm$^2$) of the adhesive layer 16 by a length L (cm) of the curved portion 20 in a direction orthogonal to a bending axis, as shown in the following Formula (2). The area B and the length L will be described later.

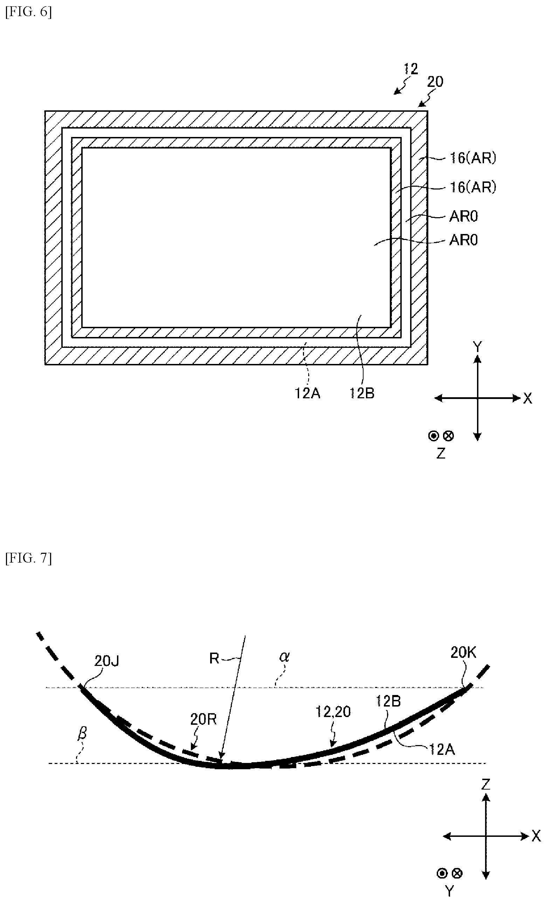

In the case where a plurality of adhesive layers 16 are provided as described later (for example, FIG. 6), $\Sigma (E_3 W)$ in Formula (1) indicates a total value of $(E_3 W)$ of the respective adhesive layers 16. In the case where only one adhesive layer 16 is provided, $\Sigma (E_3 W)$ is $(E_3 W)$ of the one adhesive layer 16.

[Math. 3]

$$W = B/L \qquad \cdots (2)$$

In this manner, it can be said that when the Young's modulus E$_1$ and the thickness t$_1$ of the cover glass 12, the Young's modulus E$_2$ and the moment of inertia of area I$_2$ of the frame 14, the elastic modulus E$_3$ of the adhesive layer 16, and the value W (the area B of the adhesive layer 16 and the length L of the curved portion 20) are set so that the parameter A falls within the above range, the deviation from a desired curved shape can be suppressed. E$_1$t$_1^2$ in Formula (1) is a parameter indicating the rigidity of the cover glass 12, and it can be said that in order to suppress the deviation from a desired curved shape, that is, in order to lower the parameter A, the value of E$_1$t$_1^2$ is preferably low. On the other hand, E$_2$I$_2$

in Formula (1) is a parameter indicating the rigidity of the frame 14, and since the higher the value of $E_2I_2$ is, the more easily the deviation from a desired curved shape of the cover glass 12 is corrected, it can be said that the value of $E_2I_2$ is preferably high in order to suppress the deviation from a desired curved shape. Similarly, since the higher the elastic modulus $E_3$ of the adhesive layer 16, the easier it is to transmit correction of the frame 14 to the cover glass 12, and the higher the value of W, the more the correction of the frame 14 is made to act on a wide area of the cover glass 12, it can be said that these values are preferably high in order to suppress the deviation from a desired curved shape.

Hereinafter, each parameter defined by Formulae (1) and (2) will be described.

(Young's Modulus $E_1$ of Cover Glass)

The Young's modulus $E_1$ of the cover glass 12 is preferably 60 GPa or more and 90 GPa or less, more preferably 68 GPa or more and 78 GPa or less, and still more preferably 72 GPa or more and 76 GPa or less. In the case where the Young's modulus $E_1$ falls within this range, the deviation from a desired curved shape can be appropriately suppressed.

The Young's modulus $E_1$ of the cover glass can be measured by a resonance method, a mechanical test method, an ultrasonic pulse method, or the like. The resonance method is a method of measuring a natural frequency by applying vibration to a test piece and calculating a Young's modulus from the natural frequency. The mechanical test method is a method of applying a load such as tension to a test piece and calculating a Young's modulus from resulting deformation and the load. The ultrasonic pulse method is a method of propagating an ultrasonic pulse to a test piece and measuring a Young's modulus from a propagation speed. In general, a Young's modulus of a glass is known to satisfy the additive law, and can also be calculated by performing multiple regression from the Young's modulus of a plurality of glass compositions.

(Thickness $t_1$ of Cover Glass)

The thickness $t_1$ of the cover glass 12 is preferably 0.1 mm or more and 3.0 mm or less, more preferably 0.4 mm or more and 1.5 mm or less, and still more preferably 0.7 mm or more and 1.4 mm or less. In the case where the thickness $t_1$ falls within this range, the deviation from a desired curved shape can be appropriately suppressed. As illustrated in FIG. 4, the thickness $t_1$ indicates a distance in the Z direction from the main surface 12A to the main surface 12B.

(Young's Modulus $E_2$ of Frame)

The Young's modulus $E_2$ of the frame 14 is preferably 1 GPa or more and 400 GPa or less, more preferably 2 GPa or more and 250 GPa or less, further preferably 40 GPa or more and 230 GPa or less, and still more preferably 60 GPa or more and 210 GPa or less. In the case where the Young's modulus $E_2$ falls within this range, the rigidity of the frame 14 can be ensured, and deviation of the cover glass 12 from a desired curved shape can be appropriately suppressed.

Similarly to the Young's modulus $E_1$, the Young's modulus $E_2$ of the frame can be measured by a resonance method, a mechanical test method, an ultrasonic pulse method, or the like.

(Moment of Inertia of Area $I_2$ of Frame)

The moment of inertia of area $I_2$ of the frame 14 is preferably 0.1 mm$^4$ or more and 1,250 mm$^4$ or less, more preferably 1 mm$^4$ or more and 450 mm$^4$ or less, and still more preferably 1.5 mm$^4$ or more and 30 mm$^4$ or less. In the case where the moment of inertia of area $I_2$ falls within this range, the rigidity of the frame 14 can be ensured without significantly impairing the designability, and the deviation from a desired curved shape can be appropriately suppressed. The moment of inertia of area is relative to the bending axis. In the example of FIG. 3A, the bending axis is a Y axis, and the sectional view of the glass article 10 on a section along the line A-A (plane perpendicular to the X axis) illustrated in FIG. 3A is illustrated in FIG. 3B. For convenience of description, FIG. 3B is a diagram assuming that the glass article 10 is not curved. In this case, the moment of inertia of area $I_2$ of the frame 14 can be obtained by integrating $t^2$ (squared value of the thickness t of the frame 14) with an area FA of the frame 14 on a plane perpendicular to the X axis on the section along the line A-A (plane perpendicular to the X axis), as illustrated in FIG. 3B. More specifically, the moment of inertia of area $I_2$ of the frame 14 can be calculated by the following Formula (3), where $L_{FA}$ is a length along the main surface of the frame 14 in a direction (here, X direction) orthogonal to the bending axis. That is, in the present embodiment, an average value of moments of inertia of area at positions in the direction along the bending axis of the frame 14 is defined as the moment of inertia of area $I_2$ of the frame 14. A distance between the positions and the number of positions used for calculating the average value at the time of calculating the average value of the moments of inertia of area for the positions in the direction along the bending axis may be any distance and any number.

[Math. 4]

$$I_2 = \frac{1}{L_F} \iint t^2 \, dF dy \qquad \qquad \cdots (3)$$

(Elastic Modulus $E_3$ of Adhesive Layer)

The elastic modulus $E_3$ of the adhesive layer 16 is preferably 0.2 MPa or more and 100 MPa or less, more preferably 1 MPa or more and 50 MPa or less, and still more preferably 5 MPa or more and 35 MPa or less. In the case where the elastic modulus falls within this range, the cover glass 12 can be appropriately adhered to the frame 14, the shape of the cover glass 12 can appropriately follow the shape of the frame 14, and the deviation of the cover glass 12 from a desired curved shape can be appropriately suppressed.

The elastic modulus $E_3$ of the adhesive layer 16 can be measured by an indentation elastic modulus test described below.

The adhesive layer 16 adhered to the main surface 12B of the cover glass 12 is exposed upward in a vertical direction and is disposed on a creep meter (for example, model number RE2-33005C, manufactured by Yamaden Co., Ltd.), and a plunger (for example, cylindrical plunger, model number P-61, φ1.5, H40, manufactured by Yamaden Co., Ltd.) is indented on the adhesive layer 16 at an indentation speed of 0.05 mm/sec in an environment of room temperature (for example, 20°C) until an indentation depth becomes 5% to 10% of the thickness of the adhesive layer 16. A load acting on the plunger when the plunger is indented and a displacement amount in the indentation direction of the plunger are sequentially measured, the load and the displacement amount are plotted for each time, and a slope of an approximate line of each plotted point is calculated as the elastic modulus of the adhesive layer 16. The indentation elastic modulus test of the present invention is a parameter indicating an adhesive strength. As an existential adhesion strength test, for example, a cross adhesive strength test or the like is known, but measurement by the method is difficult depending on the state of the glass article. In the above indentation elastic modulus test, even a glass article in a state where a cover glass and a frame are adhered to each other can be verified, and the measurement results also correlate with the adhesive strength observed in the existential adhesive strength test.

(Area B of Adhesive Layer)

As illustrated in FIG. 3A, the area B of the adhesive layer 16 refers to an area of an adhesive region AR which is a region overlapping with the adhesive layer 16 in the entire region of the main surface 12B of the curved portion 20. The area B of the adhesive layer 16 is preferably 50 cm$^2$ or more and 1,700 cm$^2$ or less, more preferably 100 cm$^2$ or more and 1,400 cm$^2$ or less, and still more preferably 200 cm$^2$ or more and 1,100 cm$^2$ or less. In the case where the area B falls within this range, the cover glass 12 may be appropriately adhered to the frame 14 while suppressing deterioration of the designability due to the excessive adhesive region AR, the shape of the cover glass 12 can appropriately follow the shape of the frame 14, and the deviation of the cover glass 12 from a desired curved shape can be appropriately suppressed. In the case where a plurality of adhesive layers 16 are provided, the area B of the adhesive layer 16 refers to an area of one adhesive layer 16 among the plurality of adhesive layers 16.

When a region that does not overlap with the adhesive layer 16 in the entire region of the main surface 12B of the curved portion 20 is defined as a region AR0, the adhesive region AR is formed on an outer side in a radial direction of the region AR0 when an axis passing through a center position of the curved portion 20 along the Z direction is defined as an axial direction. In the present embodiment, the entire cover glass 12 constitutes the curved portion 20, and therefore, a region overlapping with the adhesive layer 16 in the entire region of the main surface 12B of the cover glass 12 is the adhesive region AR. The adhesive region AR may not be continuous, and a plurality of discontinuous or mottled adhesive regions AR may be formed.

(Length L of Curved Portion)

The length (perimeter) L of the curved portion 20 refers to the length of the curved portion 20 along the main surface in the X direction orthogonal to the bending axis. The length L indicates the length of a line extending in the X direction on the main surface 12B and connecting an end point (position) on one side in the X direction of the curved portion 20 to an end point (position) in the X direction on the other side of the curved portion 20. The line extending in the X direction on the main surface 12B indicates a line extending in the X direction along the main surface 12B without deviating in the Y direction. In the example of FIG. 3A, the end point on one side in the X direction of the curved portion 20 is a point on the side surface 12C1, the end point on the other side in the X direction of the curved portion 20 is a point on the side surface 12C2, and therefore, the length L indicates a length of a line extending in the X direction on the main surface 12B from the side surface 12C1 to the side surface 12C2.

The length L is preferably 100 mm or more and 2,000 mm or less, more preferably 150 mm or more and 700 mm or less, and still more preferably 200 mm or more and 400 mm or less. In the case where the length L is preferably 2,000 mm or less, more preferably 700 mm or less, and still more preferably 400 mm or less, W can be increased to reduce the parameter A, and therefore, the deviation of the cover glass 12 from a desired curved shape can be appropriately suppressed. In the case where the length L is preferably 100 mm or more, more preferably 150 mm or more, and still more preferably 200 mm or more, deterioration of the designability can be suppressed.

In the present embodiment, even in a region where the curvature radius R is the same, a region in which the length L is 5 mm or less (for example, surface unevenness or fine undulation) is not treated as the curved portion 20. That is, a region where the curvature radius R is the same and the length L is longer than 5 mm is defined as the curved portion 20.

(Value W)

The value W obtained by dividing the area B (cm$^2$) of the adhesive layer 16 by the length L (cm) of the curved portion 20 is preferably 1 cm or more and 20 cm or less, and more preferably 2 cm or more and 6.2 cm or less. In the case where the value W falls within this range, it is possible to appropriately suppress deviation of the cover glass 12 from a desired curved shape while suppressing deterioration of the designability.

[Glass Article Production Method]

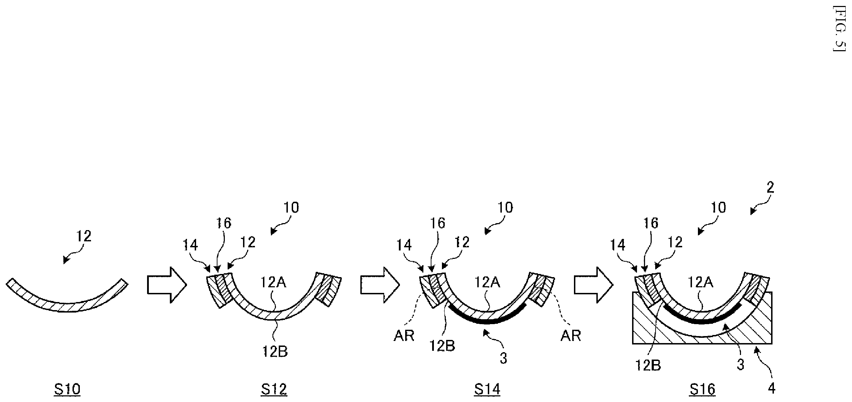

Next, a production method of the glass article 10 will be described. FIG. 5 is a schematic diagram illustrating a production method of the glass article and the display device according to the present embodiment. As illustrated in FIG. 5, in the production method according to the present embodiment, a glass plate, which is the flat plate-shaped cover glass 12, is curved while being heated (by hot forming), thereby shaping the cover glass 12 including the curved portion 20 (step S10). The cover glass 12 at the stage of step S10, that is, the cover glass 12 in a state of not being attached to the frame 14, is curved to have the above-described curvature radius R1. Next, the main surface 12B of the cover glass 12 is adhered to the frame 14 via the adhesive layer 16 to obtain the glass article 10 (step S12). The cover glass 12 after step S12, that is, the cover glass 12 in a state of being attached to the frame 14, is curved to have the above-described curvature radius R. Then, the display 3 is attached to the main surface 12B of the glass article 10 at an inner side with respect to the adhesive region AR on which the frame 14 and the adhesive layer 16 are adhered (step S14). Then, the glass article 10 to which the display 3 is attached is attached to a housing 4 to form the display device 2 (step S16). In step S16, the glass article 10 to which the display 3 is attached is attached to the housing 4 so that the display 3 is housed in the housing 4 and a main surface 12A side is exposed to the outside.

In the example of FIG. 5, the main surface 12B to which the frame 14 and the display 3 are attached is convex, and the main surface 12A exposed to the outside is concave, but without being limited thereto, the main surface 12B may be concave and the main surface 12A may be convex, as illustrated in FIG. 2 and the like. The step of housing the display 3 in the housing 4 as in step S16 is not essential, and the glass article 10 to which the display 3 is attached may be treated as the display device 2.

In the present production method, it is preferable to chemically strengthen the cover glass 12 after step S10. More specifically, it is preferable to chemically strengthen the hot-formed cover glass 12 after step S10, and then execute step S12 to attach the frame 14 to the chemically strengthened cover glass 12.

(Effects)

As described above, the glass article 10 according to a first aspect of the present embodiment includes the cover glass 12 that is hot-formed and includes the curved portion 20, the frame 14 provided on the main surface 12B of the cover glass 12, and the adhesive layer 16 provided between the main surface 12B of the cover glass 12 and the frame 14 to adhere the cover glass 12 and the frame 14. In the glass article 10, the parameter A is more than 0 and 0.5 or less. In the glass article 10 according to the present embodiment, the cover glass 12 that is curved to some extent by hot forming is adhered to the frame 14 to be further curved, so that the cover glass 12 can be appropriately curved to a desired shape. In the case where the parameter A is 0.5 or less, for example, the value PV described later can be suppressed to a deviation at a level of 0.5 or less, so that the deviation of the cover glass 12 from a desired curved shape can be appropriately suppressed.

The glass article 10 according to a second aspect of the present embodiment is the glass article 10 according to the first aspect, in which an absolute value of a difference between the curvature radius R1 of a curved portion of the cover glass 12 in a state where the cover glass 12 is detached from the frame 14 and the curvature radius R of the curved portion of the cover glass 12 in a state where the cover glass 12 is attached to the frame 14 is preferably equal to or less than 10% of the curvature radius R. In the case where the absolute value of the difference in the curvature radius falls within this range, the deviation of the glass article from a desired shape of the cover glass 12 can be suppressed.

The glass article 10 according to a third aspect of the present embodiment is the glass article 10 according to the first or second aspect, in which the curvature radius R of the curved portion 20 of the cover glass 12 is preferably 100 mm or more and 8,000 mm or less. In the case where the curvature radius R falls within this range, deviation of the cover glass 12 from a desired shape can be suppressed while improving the designability.

The glass article 10 according to a fourth aspect of the present embodiment is the glass article 10 according to any of the first to third aspects, in which the thickness $t_1$ of the cover glass 12 is preferably more than 1 mm. In the case where the thickness $t_1$ falls within this range, the deviation of the cover glass 12 from a desired shape can be suppressed.

The glass article 10 according to a fifth aspect of the present embodiment is the glass article 10 according to any of the first to fourth aspects, in which the curvature radius R1 of the curved portion of the cover glass 12 in a state where the cover glass 12 is detached from the frame 14 is preferably 50 mm or more and 10,000 mm or less. In the case where the curvature radius R1 falls within this range, deviation of the cover glass 12 from a desired shape can be appropriately suppressed while improving the designability.

The glass article 10 according to a sixth aspect of the present embodiment is the glass article 10 according to any of the first to fifth aspects, in which the Young's modulus $E_1$ of the cover glass 12 is 60 GPa or more and 90 GPa or less, the Young's modulus $E_2$ of the frame 14 is 1 GPa or more and 400 GPa or less, the elastic modulus $E_3$ of the adhesive layer 16 is 0.2 MPa or more and 100 MPa or less, and the moment of inertia of area $I_2$ of the frame 14 is 0.1 $mm^4$ or more and 1,250 $mm^4$ or less. In the case where these parameters fall within the above ranges, the deviation of the cover glass 12 from a desired shape can be appropriately suppressed.

The glass article 10 according to a seventh aspect of the present embodiment is the glass article 10 according to any of the first to sixth aspects, in which the cover glass 12 is preferably chemically strengthened. The strength can be improved by chemically strengthening.

The display device 2 according to an eighth aspect of the present embodiment includes the display 3 and the glass article 10 according to any of the first to seventh aspects which is provided on a surface of the display 3. Therefore, the deviation of the cover glass 12 from a desired shape can be appropriately suppressed.

A glass article production method according to a ninth aspect of the present embodiment includes a step of shaping the cover glass 12 including the curved portion 20 by curving a glass plate while heating the glass plate, and a step of adhering the main surface 12B of the cover glass 12 to the frame 14 via the adhesive layer 16 to produce the glass article 10. According to the present production method, the deviation of the cover glass 12 from a desired shape can be appropriately suppressed.

A glass article production method according to a tenth aspect of the present embodiment is the glass article production method according to the ninth aspect, in which it is preferable to use the cover glass 12, the frame 14, and the adhesive layer 16 in which the parameter A defined by Formula (1) is 0.5 or less. According to the present production method, in the case where the parameter A is 0.5 or less, for example, the value PV described later can be suppressed to a deviation at a level of 0.5 or less, so that the deviation of the cover glass 12 from a desired curved shape can be appropriately suppressed.

A glass article production method according to an eleventh aspect of the present embodiment is the glass article production method according to the ninth or tenth aspect, in which it is preferably to further include a step of chemically strengthening the cover glass 12 after the step of shaping the cover glass 12. According to the present production method, it is possible to increase the strength of the cover glass 12 and suppress damage.

A display device production method according to a twelfth aspect of the present disclosure includes a step of attaching, to the display 3, the glass article 10 produced by the production method according to any of the ninth to eleventh aspects, thereby producing the display device 2. According to the present production method, the deviation of the cover glass 12 from a desired shape can be appropriately suppressed.

(Other Examples)

Next, other examples of the glass article 10 according to the present embodiment will be described.

(Examples of Plurality of Adhesive Layers)

FIG. 6 is a diagram illustrating an example in which a plurality of adhesive layers are provided. Although one adhesive layer 16 is provided in the above description, a plurality of adhesive layers 16 may be provided. In this case, the adhesive layers 16 are adhered to the main surface 12B of the cover glass 12 at positions different from one another when viewed from the Z direction, as illustrated in FIG. 6. In the case where the plurality of adhesive layers 16 are provided, it is preferable to provide the adhesive layer 16 having a lower adhesive force (elastic modulus) at an outer side in a radial direction than the adhesive layer 16 having a higher adhesive force (elastic modulus). For example, when the adhesive layer 16 having a low adhesive force such as a double-sided tape is provided at the outer side, it functions as a bank of the adhesive layer 16 (for example, adhesive) at the inner side having a high adhesive force, and the adhesive before curing can be suppressed from protruding to the outer side. In the example of FIG. 6, the adhesive layers 16 are provided in a state where an outer peripheral edge of the adhesive layer 16 at the inner side and an inner peripheral edge of the adhesive layer 16 at the outer side are separated from each other. However, FIG. 6 is an example, and the positions of the respective adhesive layers 16 may be freely set. Although FIG. 6 illustrates that two adhesive layers 16 are provided, three or more adhesive layers 16 may be provided.

(Example of Spline Shape)

FIG. 7 is a schematic diagram of a cover glass according to another example of the present embodiment. In the above-described embodiment, the curved portion 20 is described as a portion bent with the same curvature radius R, but may be bent in the X direction in a spline curve shape of which the curvature radius is not constant. In this case, the entire portion bent in the X direction in a spline curve shape is treated as the curved portion 20. In the description of the above-described embodiment, a region in which a change in the curvature radius R measured at each position from an end point on one side to an end point on the other side in the X direction of a region bent with the Y direction as a bending axis on the main surface 12B is 5% or less is treated as one curved portion 20 having the same curvature radius. On the other hand, in the present example, a region in which the change in the curvature radius R at each position in a section having a length of 50 mm or less from an end point on one side toward an end point on the other side in the X direction of a region bent with the Y direction as a bending axis on the main surface 12B is more than 5% is treated as one curved portion 20 having a spline shape. As illustrated in FIG. 7, the curved portion 20 having a spline shape is approximated to a shape curved at a constant curvature radius, and a curvature radius approximated to the shape curved at a constant curvature radius is treated as the curvature radius R of the curved portion 20.

Specifically, one end point in the X direction of the main surface 12B of the curved portion 20 having a spline shape is defined as an end point 20J, the other end point is defined as an end point 20K, and a plane connecting the end point 20J and the end point 20K and extending along the X direction and the Y direction (that is, XY plane passing through the end points 20J and 20K) is defined as a plane $\alpha$. When a plane obtained by translating the plane $\alpha$ in the Z direction so as to come into contact with the main surface 12B is defined as a plane $\beta$, a curvature radius of an arc 20R passing through the end point 20J and the end point 20K and coming into contact with the plane $\beta$ is defined as the curvature radius R of the curved portion 20.

(Example Provided with Flat Portion)

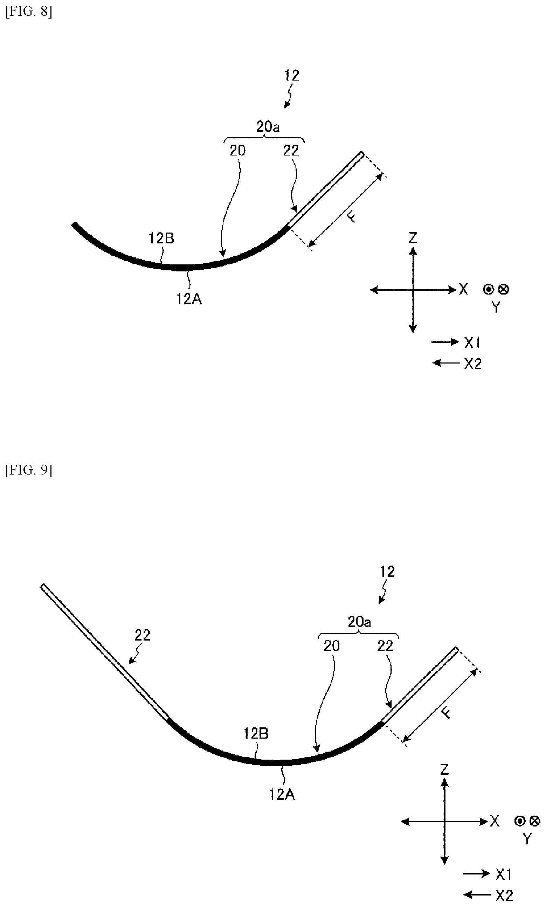

FIGS. 8 and 9 are schematic diagrams of a cover glass according to another example of the present embodiment. A flat portion 22 may be connected to the curved portion 20 on an X1 side. An orientation X1 is one orientation along the X direction, and an orientation X2 is the other orientation along the X direction. The flat portion 22 is connected to the curved portion 20 such that the main surface 12B is continuous (not discontinuous) with the curved portion 20. The flat portion 22 is a portion having a flat shape which is connected to an end portion of the curved portion 20 on the orientation X1 side, in the entire region of the cover glass 12. The expression that the flat portion 22 has a flat shape is not limited to a case where the curvature radius is infinite, and may also include a case where the curvature radius is more than 10,000 mm.

In the case where the flat portion 22 is connected to the curved portion 20, the curved portion 20 and the flat portion 22 are treated as one curved portion 20a in the application of Formulae (1) and (2). For example, in the case where the flat portion 22 is provided on the orientation X1 side of the curved portion 20 and the flat portion 22 is not provided on the orientation X2 side as illustrated in FIG. 8, a length of the curved portion 20a in the X direction, which is a bending direction (sum of the length of the curved portion 20 in the X direction and the length F of the flat portion 22), is treated as the length L. In addition, an area of a region overlapping with the adhesive layer 16 on the main surface 12B of the curved portion 20a (sum of an area of a region overlapping with the adhesive layer 16 on the main surface 12B of the curved portion 20 and an area of a region overlapping with the adhesive layer 16 on the main surface 12B of the flat portion 22) is treated as the area B.

The length F of the flat portion 22 refers to a length along the main surface 12B from an end point of the flat portion 22 on the orientation X1 side of the main surface 12B to an end point of the flat portion 22 on the orientation X2 side of the main surface 12B.

As illustrated in FIG. 9, the flat portion 22 may be connected to both sides of the curved portion 20 in the X direction (both the orientation X1 side and the orientation X2 side). As illustrated in FIG. 9, in the case where the lengths F along the main surface 12B of the flat portion 22 on the orientation X1 side of the curved portion 20 and the flat portion 22 on the orientation X2 side are different, the curved portion 20 and the flat portion 22 having a shorter length F along the main surface 12B are treated as one curved portion 20a. That is, the length of the curved portion 20a in the X direction (sum of the length of the curved portion 20 and the length F of the shorter flat portion 22) is treated as the length L, and an area of a region overlapping with the adhesive layer 16 on the main surface 12B of the curved portion 20a (sum of an area of a region overlapping with the adhesive layer 16 on the main surface 12B of the curved portion 20 and an area of a region overlapping with the adhesive layer 16 on the main surface 12B of the shorter flat portion 22) is treated as the area B. In the case where the lengths F along the main surface 12B of the flat portion 22 on the orientation X1 side of the curved portion 20 and the flat portion 22 on the orientation X2 side are the same, the curved portion 20 and either of the flat portions 22 are treated as one curved portion 20a.

(Example of Case of Plurality of Curved Portions)

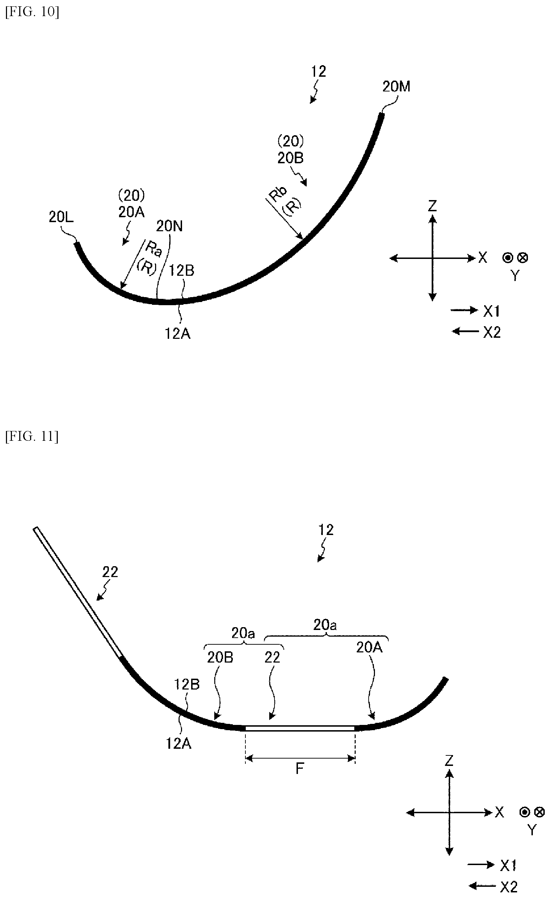

FIGS. 10 and 11 are schematic diagrams of a cover glass according to another example of the present embodiment. A plurality of curved portions 20 may be provided, in other words, a plurality of curved portions 20 having different curvature radii R may be formed in the cover glass 12. In this case, the respective curved portions 20 are bent with the same direction, that is the Y direction, as a bending axis.

Whether there are a plurality of curved portions 20 can be determined as follows. That is, in a region in which a change in the curvature radius R is more than 5% at each position in a section longer than 50 mm from an end point on one side in the X direction toward an end point on the other side of a region bent with the Y direction as a bending axis on the main surface 12B, it is determined that a plurality of curved portions 20 having different curvature radii R are formed. That is, in the case where the change in the curvature radius R is 5% or less in a section having a length of 50 mm or less from an end point on one side in the X direction toward an end point on the other side in a region bent with the Y direction as the bending axis on the main surface 12B but the change in the curvature radius R exceeds 5% in a section longer than 50 mm from the end point on one side toward the end point on the other side, it is determined that a plurality of curved portions are formed instead of one curved portion having a spline shape.

In this case, as illustrated in the example of FIG. 10, in a region bent with the Y direction as a bending axis on the main surface 12B, a region in which the change in the curvature radius R is 5% or less at each position of a section from an end point 20L on one side in the X direction toward an end point 20M on the other side of the region is set as one curved portion 20A in which the curvature radius R is the same. The curved portion 20A is a region from the end point 20L on one side to a position 20N where the change in the curvature radius R is more than 5%. Further, a region in which the change in the curvature radius R at each position of a section from the position 20N toward the end point 20M on the other side is 5% or less is set as another curved portion 20B. In the example of FIG. 10, since the change in the curvature radius in the section from the position 20N to the end point 20M is 5% or less, the region from the position 20N to the end point 20M is treated as the curved portion 20B. However, for example, in the case where there is a position where the change in the curvature radius R is more than 5% between the position 20N and the end point 20M, a region from the position 20N to the position where the change in the curvature radius R is more than 5% becomes one curved portion 20B. In this case, there are three or more curved portions 20.

In the case where a plurality of curved portions 20 are formed in this manner, Formulae (1) and (2) are applied to each curved portion 20. FIG. 10 illustrates an example in which the curved portion 20A having a curvature radius Ra and the curved portion 20B having a curvature radius Rb are formed. In the example of FIG. 10, both of the curved portions 20A and 20B are convex toward the main surface 12A, but without being limited thereto, both of the curved portions 20A and 20B may be convex toward the main surface 12B. That is, in the case where there are a plurality of curved portions 20, the curved portions 20 are convex toward the same direction side. The number of the curved portions 20 is not limited to two, and may be three or more.

FIG. 11 illustrates an example in which the flat portion 22 is connected to the plurality of curved portions 20. In the case where the flat portion 22 is connected to the plurality of curved portions 20, one curved portion 20 and the flat portion 22 connected to this curved portion 20 are treated as one curved portion 20a in the application of Formulae (1) and (2). In the example of FIG. 11, a longer flat portion 22 is connected to the orientation X2 side of the curved portion 20B, a shorter flat portion 22 is connected to the orientation X1 side of the curved portion 20B, and the curved portion 20A is connected to a side of the shorter flat portion 22 opposite to the curved portion 20B. In this case, the curved portion 20A and the shorter flat portion 22 are treated as one curved portion 20a, and the curved portion 20B and the shorter flat portion 22 are treated as another curved portion 20a. A method of calculating the length L and the area B of the curved portion 20a is the same as that in the case where the flat portion 22 is connected to one curved portion 20, and thus the description thereof will be omitted.

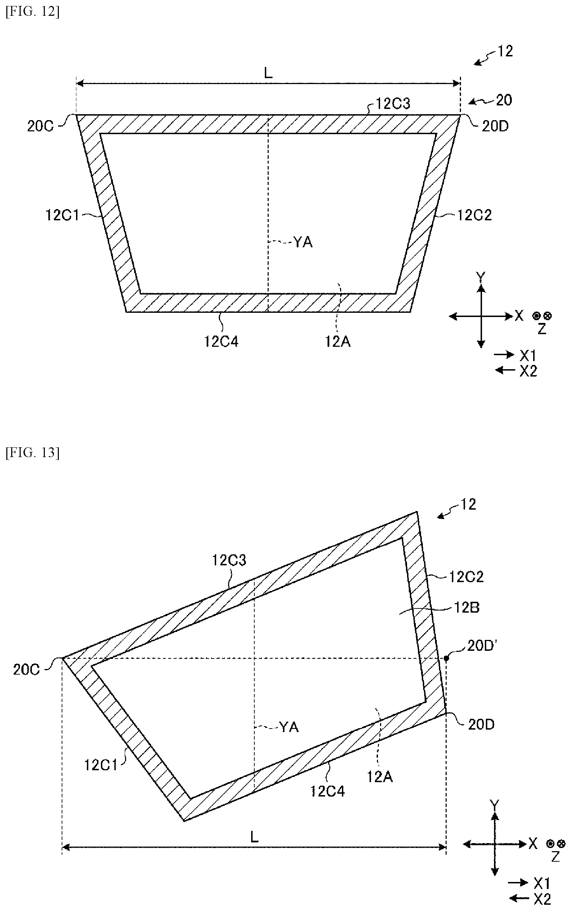

FIGS. 12 to 15 are schematic diagrams of a cover glass according to another example of the present embodiment. In the description of the above-described embodiment, a rectangular glass plate is bent in the X direction to form the cover glass 12, and therefore, the length of the cover glass 12 in the X direction is constant at each position, but the length of the cover glass 12 in the X direction may be different for each position depending on the shape. The length L in such a case will be described below.

As described above, the length L indicates a length of a line extending in the X direction on the main surface 12B and connecting from a position on the most one side (orientation X1 side) of the curved portion 20 in the X direction with respect to a bending axis YA along the Y direction to a position on the most other side (orientation X2 side) 20 in the X direction with respect to the bending axis YA of the curved portion 20. Therefore, for example, in the case where a trapezoidal glass plate is bent with the Y direction as a bending axis to form the cover glass 12, two end points of the side surface 12C3, which is a long side of the trapezoid, are a position 20C on the most orientation X2 side and a position 20D on the most X1 side with respect to the bending axis YA of the curved portion 20, and a length of a line connecting the position 20C and the position 20D and extending in the X direction on the main surface 12B is the length L, as illustrated in FIG. 12.

In the above description, the X direction orthogonal to the bending axis is along the side surfaces 12C3 and 12C4 which are sides in a lateral direction of the flat plate-shaped cover glass 12 before bending, but without being limited thereto, the X direction orthogonal to the bending axis may be deviated with respect to (may intersect with) the side of the flat plate-shaped cover glass 12 before bending. FIG. 13 illustrates an example in which the X direction intersects with the side surfaces 12C3 and 12C4 of the flat plate-shaped cover glass 12 before bending. In the example of FIG. 13, one end point of the side surface 12C3 which is a long side of the trapezoid is the position 20C, and the other end point of the side surface 12C4 which is a short side of the trapezoid is the position 20D. In the example of FIG. 13, since positions of the position 20C and the position 20D in the Y direction are not aligned, the position 20D is shifted in the Y direction to define a position 20D', and a length of a line connecting the position 20C and the position 20D' and extending in the X direction on a surface along the main surface 12B is defined as the length L. That is, in the example of FIG. 13, a length of a curve connecting the position 20C and the position 20D' and having the curvature radius R is the length L. The position 20D' is a position obtained by shifting the position 20D in the Y direction so that a position of the position 20D' in the Y direction is aligned with a position of the position 20C in the Y direction. In this manner, in the case where the positions of the position 20C and the position 20D in the Y direction are not aligned, a length of a line traveling in the X direction on a surface along the main surface 12B from the position 20C to the position 20D' of which the positions in the Y direction are aligned is defined as the length L.

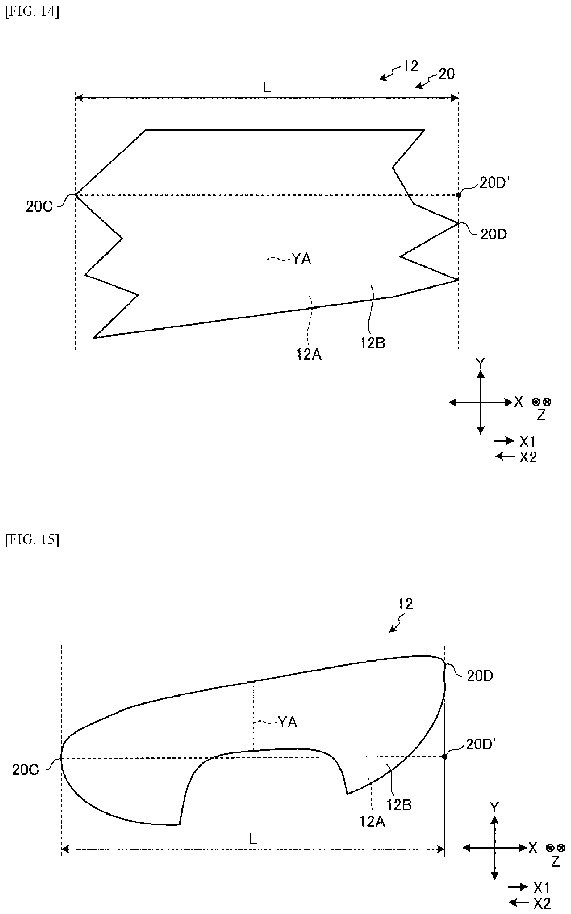

FIG. 14 illustrates an example in which a polygonal glass plate is bent in the X direction to form the cover glass 12. In the example of FIG. 14, the positions of the position 20C and the position 20D in the Y direction, which are points on the most orientation X2 side and the orientation X1 side of the curved portion 20 in the X direction with respect to the bending axis YA along the Y direction, are also not aligned with each other, and therefore, a length of a line connecting the position 20D' and the position 20C and extending in the X direction on a surface along the main surface 12B is the length L.

FIG. 15 illustrates an example in which a glass plate of which an outer periphery has a curved shape is curved in the X direction to form the cover glass 12. In the example of FIG. 15, the positions of the position 20C and the position 20D in the Y direction, which are points on the most orientation X2 side and orientation X1 side of the curved portion 20 in the X direction with respect to the bending axis YA along the direction Y, are also not aligned with each other. Therefore, a length of a line connecting the position 20D' and the position 20C and extending in the X direction on a surface along the main surface 12B is the length L.

FIGS. 16 to 18 are schematic diagrams of a cover glass according to another example of the present embodiment. In the above description, a plurality of curved portions 20 are bent in the same direction with the Y direction as a bending axis, but directions of bending axes of the plurality of curved portions 20 may be different. In this case, the bending axes of the respective curved portions 20 do not intersect with one another on the main surface 12A of the cover glass 12, but intersect with one another at a point obtained by extending the bending axes of the respective curved portions 20 outward from the main surface 12A.

FIGS. 16 and 17 illustrate examples of schematic diagrams of the cover glass 12 in which the directions of the bending axes of the plurality of curved portions 20 are different. In the example of FIG. 16, the curved portion 20A is connected to the orientation X2 side of the flat portion 22, and the curved portion 20B is connected to the orientation X1 side of the flat portion 22. The curved portion 20A is bent with the bending axis YA as a bending axis from the side surface 12C1, which is an end side on the orientation X2 side, to an end side 20P on the orientation X1 side. That is, the curved portion 20A is a region bent with the bending axis YA as a bending axis so that a change in the curvature radius at each position in the X direction from the side surface 12C1 to the end side 20P is 5% or less. The curved portion 20B is bent with a bending axis YB as a bending axis from an end side 20Q on the orientation X2 side to the side surface 12C2 which is an end side on the orientation X1 side. That is, the curved portion 20B is a region bent with the bending axis YB as a bending axis so that a change in the curvature radius at each position in the X direction from the end side 20Q to the side surface 12C2 is 5% or less. The flat portion 22 is a flat region from the end side 20P to the end side 20Q in the X direction.

The bending axis YA of the curved portion 20A and the bending axis YB of the curved portion 20B extend in different directions, but do not intersect with each other on the main surface 12A of the cover glass 12, and intersect with each other at a point obtained by extending the bending axes YA and YB outward from the main surface 12A. FIG. 16 is illustrated as a figure in which the Y direction is defined as the bending axis, that is, the bending axes YA and YB are in the same direction for convenience of description, but actually, the bending axes YA and YB of the curved portions 20A and 20B extend in different directions.

In the case where the flat portion 22 is connected to the plurality of curved portions 20 of which directions of bending axes are different, one of the curved portions 20 and the flat portion 22 connected to the curved portion 20 are treated as one curved portion 20a in the application of Formulae (1) and (2). In the example of FIG. 17, the flat portion 22 is connected to the orientation X1 side of the curved portion 20A, and the flat portion 22 is connected to the orientation X2 side of the curved portion 20B. In this case, the curved portion 20A and the flat portion 22 are treated as one curved portion 20a, and the curved portion 20B and the flat portion 22 are treated as another curved portion 20a. A method of calculating the area B of the curved portion 20a is the same as that in the case where the flat portion 22 is connected to one curved portion 20, and thus the description thereof will be omitted.

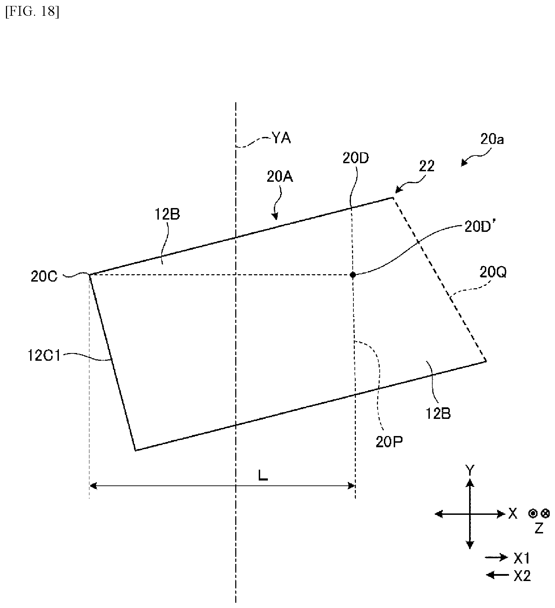

A method of calculating the length L of the plurality of curved portions 20 of which directions of bending axes are different will be described with reference to FIG. 18. FIG. 18 is a diagram in which the curved portion 20a including the curved portion 20A and the flat portion 22 is extracted for convenience of description. In the example of FIG. 18, an end point of the side surface 12C1 on the most orientation X2 is the position 20C of the curved portion 20a, and an end point of the end side 20P on the most orientation X1 side is the position 20D of the curved portion 20a. In the example of FIG. 20, since positions of the position 20C and the position 20D in the Y direction are not aligned, the position 20D is shifted in the Y direction to define a position 20D', and a length of a line connecting the position 20C and the position 20D' and extending in the X direction on a surface along the main surface 12B is defined as the length L of the curved portion 20a. That is, in the example of FIG. 20, a length of a curve connecting the position 20C and the position 20D' and having the curvature radius R is the length L. The length L is obtained in the same manner for the curved portion 20a including the curved portion 20B and the flat portion 22, and description thereof is omitted.

Examples

Next, Examples will be described. The embodiments may be modified as long as the effects of the invention are exerted. In each Example, a simulation test was performed.

(Simulation)

For the simulation, impact/collision analysis software using a finite element method (PAM-CRASH, manufactured by Japan ESI Corporation) was used. In the simulation, COS3D (Material Type 305) capable of setting an adhesion fracture energy was used as an adhesive layer, and an adhesion fracture energy EFRSn was set to match the actual test. In the simulation, first, an elastic energy for bending (accumulated as stress of glass) was applied to a glass plate. At this time, a glass plate having an initial shape simulating a bending amount generated by actual thermal bending was elastically corrected to an ideal shape. Accordingly, the elastic energy corresponding to the bending amount can be accumulated as the stress of the glass. Next, a frame was bonded, via the adhesive layer, to the glass plate in which the elastic energy was accumulated. The glass, the adhesive layer, and the frame were deformed by the elastic energy of the glass and were balanced in a certain state. The maximum value of a difference deviation in distance in the vertical direction from the ideal shape of the shape in the balanced state at this time was calculated as the value PV. The initial shape in the simulation can be set based on a desired elastic energy to be applied to the glass plate, and the desired elastic energy was set to the same value in each Example.

Since an element of the adhesive layer of which the adhesive energy exceeds the adhesion fracture energy disappears, a phenomenon in which the glass is peeled off from the frame can be expressed by the simulation. It has been confirmed that there is no divergence between the simulation results and results of the actual test.

(Simulation Conditions)

Table 1 shows conditions of simulation models of Examples. For example, in Example 1, a model was prepared by adhering a cover glass and a frame with one adhesive layer (first adhesive layer) so that the curvature radius R of the cover glass was the value described in Table 1. Similarly, in Examples 16 and 17, two kinds of adhesive layers (first adhesive layer and second adhesive layer) were used as the adhesive layer for adhering the cover glass and the frame. The thickness $t_1$ and the Young's modulus $E_1$ of the cover glass, the moment of inertia of area $I_2$ and the Young's modulus $E_2$ of the frame, the elastic modulus $E_3$ of the first adhesive layer, and the elastic modulus $E_3$ of the second adhesive layer, and the value W were values shown in Table 1.

The parameter A was calculated for each Example. Values of the parameter A are shown in Table 1.

[Table 1]

| | | Conditions | | | | | |
|---|---|---|---|---|---|---|---|
| | | Cover glass | | | Frame | | |
| | | Thickness $t_1$ (mm) | Young's modulus $E_1$ (GPa) | Curvature radius R (mm) | Thickness $t_2$ (mm) | Moment of inertia of area $I_2$ (mm$^4$) | Young's modulus $E_2$ (GPa) |
| | Ex. 1 | 1.4 | 74 | 2,750 | 2 | 42 | 206 |

(continued)

| | | Conditions | | | | | |
|---|---|---|---|---|---|---|---|
| | | Cover glass | | | Frame | | |
| | | Thickness $t_1$ (mm) | Young's modulus $E_1$ (GPa) | Curvature radius R (mm) | Thickness $t_2$ (mm) | Moment of inertia of area $I_2$ (mm$^4$) | Young's modulus $E_2$ (GPa) |
| | Ex. 2 | 1.4 | 74 | 2,750 | 2 | 16 | 206 |
| | Ex. 3 | 1.4 | 74 | 2,750 | 1 | 5 | 206 |
| | Ex. 4 | 1.4 | 74 | 2,750 | 1 | 2 | 206 |
| | Ex. 5 | 1.4 | 74 | 2,750 | 4 | 333 | 206 |
| | Ex. 6 | 1.4 | 74 | 2,750 | 2 | 42 | 206 |
| | Ex. 7 | 1.4 | 74 | 2,750 | 2 | 16 | 206 |
| | Ex. 8 | 1.4 | 74 | 2,750 | 2 | 42 | 206 |
| | Ex. 9 | 1.4 | 74 | 2,750 | 2 | 16 | 206 |
| | Ex. 10 | 1.4 | 74 | 2,750 | 4 | 333 | 70 |
| | Ex. 11 | 0.7 | 74 | 2,750 | 2 | 42 | 206 |
| | Ex. 12 | 0.7 | 74 | 2,750 | 2 | 16 | 206 |
| | Ex. 13 | 1.4 | 77 | 2,750 | 2 | 42 | 206 |
| | Ex. 14 | 1.4 | 77 | 2,750 | 2 | 16 | 206 |
| | Ex. 15 | 1.4 | 74 | 2,750 | 4 | 333 | 2.2 |
| | Ex. 16 | 1.4 | 74 | 2,750 | 2 | 42 | 206 |
| | Ex. 17 | 1.4 | 74 | 2,750 | 2 | 42 | 206 |
| | Ex. 18 | 1.4 | 74 | 2,000 | 2 | 42 | 206 |
| | Ex. 19 | 1.4 | 74 | 2,750 | 0 | 0 | 0 |

[Table 1 (Continued)]

| | | Conditions | | | | | Evaluation |
|---|---|---|---|---|---|---|---|
| | | First adhesive layer | | Second adhesive layer | | | |
| | | Elastic modulus $E_3$ (MPa) | Area/perimeter W (cm) | Elastic modulus $E_3$ (MPa) | Area/perimeter W (cm) | Parameter A | PV |
| | Ex. 1 | 14 | 6.2 | 0 | 0 | 0.17 | 0.19 |
| | Ex. 2 | 14 | 2.3 | 0 | 0 | 0.38 | 0.36 |
| | Ex. 3 | 14 | 6.2 | 0 | 0 | 0.42 | 0.36 |
| | Ex. 4 | 14 | 2.3 | 0 | 0 | 0.59 | 0.65 |
| | Ex. 5 | 14 | 6.2 | 0 | 0 | 0.10 | 0.08 |
| | Ex. 6 | 33 | 6.2 | 0 | 0 | 0.14 | 0.17 |
| | Ex. 7 | 33 | 2.3 | 0 | 0 | 0.32 | 0.32 |
| | Ex. 8 | 4 | 6.2 | 0 | 0 | 0.20 | 0.21 |
| | Ex. 9 | 4 | 2.3 | 0 | 0 | 0.41 | 0.42 |
| | Ex. 10 | 14 | 6.2 | 0 | 0 | 0.10 | 0.11 |
| | Ex. 11 | 14 | 6.2 | 0 | 0 | 0.12 | 0.06 |
| | Ex. 12 | 14 | 2.3 | 0 | 0 | 0.16 | 0.12 |

(continued)

| | Conditions | | | | | Evaluation |
|---|---|---|---|---|---|---|
| | First adhesive layer | | Second adhesive layer | | Parameter A | PV |
| | Elastic modulus $E_3$ (MPa) | Area/perimeter W (cm) | Elastic modulus $E_3$ (MPa) | Area/perimeter W (cm) | | |
| Ex. 13 | 14 | 6.2 | 0 | 0 | 0.18 | 0.16 |
| Ex. 14 | 14 | 2.3 | 0 | 0 | 0.40 | 0.33 |
| Ex. 15 | 14 | 6.2 | 0 | 0 | 0.44 | 0.36 |
| Ex. 16 | 14 | 2 | 33 | 4.1 | 0.15 | 0.17 |
| Ex. 17 | 14 | 2 | 4 | 4.1 | 0.19 | 0.22 |
| Ex. 18 | 14 | 6.2 | 0 | 0 | 0.17 | 0.09 |
| Ex. 19 | 0 | 0 | 0 | 0 | 0.73 | 0.70 |

(Evaluation)

In the evaluation, the value PV which was a deviation amount from a desired shape of the cover glass was calculated in the simulation. The value PV was calculated as described above.

In the evaluation, the case having the value PV of 0.5 or less is regarded as acceptable, and the case having the value PV of more than 0.5 was regarded as unacceptable. In Examples 1 to 3 and 5 to 18 which are Inventive Examples and in which the parameter A is 0.5 or less, the value PV is acceptable, and it can be seen that the deviation of the cover glass from a desired shape can be suppressed. On the other hand, in Examples 4 and 19 which are Comparative Examples and in which the parameter A is more than 0.5, the value PV is unacceptable, and it can be seen that the deviation of the cover glass from a desired shape cannot be suppressed.

Although the embodiments of the present invention have been described above, the embodiments are not limited to the contents of these embodiments. In addition, the components described above should include those that can be easily conceived by a person skilled in the art, those that are substantially the same, and those within a so-called equivalent range. Further, the above components can be appropriately combined. Further, various omissions, substitutions, or modifications of the components can be made without departing from the gist of the embodiments described above.

INDUSTRIAL APPLICABILITY

According to the present invention, deviation of a cover glass from a desired shape can be suppressed.

Although the present invention has been described in detail with reference to specific embodiments, it is apparent to those skilled in the art that various changes and modifications can be made without departing from the spirit and scope of the present invention.

The present application is based on a Japanese Patent Application (Japanese Patent Application No. 2022-123808) filed on August 3, 2022, the contents of which are incorporated herein by reference.

REFERENCE SIGNS LIST

1: steering shaft
2: display device
3: display
4: housing
10: glass article
12: cover glass
12A, 12B: main surface
12C1, 12C2, 12C3, 12C4: side surface
14: frame
16: adhesive layer

20, 20A, 20B: curved portion
20a: curved portion
20C, 20D, 20D', 20N: position
20J, 20K, 20L, 20M: end point
20P, 20Q: end side
20R: arc
22: flat portion

## Claims

1. A glass article, comprising:

   a cover glass that is hot-formed and includes a curved portion;
   a frame provided on a main surface of the cover glass; and
   an adhesive layer provided between the main surface of the cover glass and the frame to adhere the cover glass and the frame, wherein
   a parameter A defined by the following Formula (1) is more than 0 and 0.5 or less,
   [Math. 1]

$$A = \exp\left(0.014 E_1 t_1^2 - 0.00020 E_2 I_2 - 0.0053 \sum (E_3 W) - 2.5\right) \\ + 0.1 \qquad \cdots (1)$$

   where

   $E_1$ is a Young's modulus (GPa) of the cover glass,
   $t_1$ is a thickness (mm) of the cover glass,
   $E_2$ is a Young's modulus (GPa) of the frame,
   $I_2$ is a moment of inertia of area (mm$^4$) of the frame,
   $E_3$ is an elastic modulus (MPa) of the adhesive layer, and
   $W$ is a value obtained by dividing an area (cm$^2$) of the adhesive layer by a length (cm) of the curved portion along the main surface in a direction orthogonal to a bending axis.

2. The glass article according to claim 1, wherein
   an absolute value of a difference between a curvature radius R1 of the curved portion of the cover glass in a state where the cover glass is detached from the frame and a curvature radius R of the curved portion of the cover glass in a state where the cover glass is attached to the frame is equal to or less than 10% of the curvature radius R.

3. The glass article according to claim 1 or 2, wherein
   the curvature radius R of the curved portion of the cover glass is 100 mm or more and 8,000 mm or less.

4. The glass article according to claim 1 or 2, wherein
   the thickness $t_1$ of the cover glass is more than 1 mm.

5. The glass article according to claim 1 or 2, wherein
   the curvature radius R1 of the curved portion of the cover glass in a state where the cover glass is detached from the frame is 50 mm or more and 10,000 mm or less.

6. The glass article according to claim 1 or 2, wherein

   the Young's modulus $E_1$ of the cover glass is 60 GPa or more and 90 GPa or less,
   the Young's modulus $E_2$ of the frame is 1 GPa or more and 400 GPa or less,
   the elastic modulus $E_3$ of the adhesive layer is 0.2 MPa or more and 100 MPa or less, and
   the moment of inertia of area $I_2$ of the frame is 0.1 mm$^4$ or more and 1,250 mm$^4$ or less.

7. The glass article according to claim 1 or 2, wherein

the cover glass is chemically strengthened.

8. A display device, comprising:

   a display, and
   the glass article according to claim 1 or 2, which is provided on a surface of the display.

9. A glass article production method, comprising:

   a step of shaping a cover glass including a curved portion by curving a glass plate while heating the glass plate; and
   a step of adhering a main surface of the cover glass to a frame via an adhesive layer to produce a glass article.

10. The glass article production method according to claim 9, wherein
    the cover glass, the frame, and the adhesive layer, satisfying a parameter A defined by the following Formula (1) of 0.5 or less are used,
    [Math. 2]

$$A = \exp\left(0.014E_1 t_1^2 - 0.00020E_2 I_2 - 0.0053 \sum (E_3 W) - 2.5\right) + 0.1 \qquad \cdots (1)$$

   where

   $E_1$ is a Young's modulus (GPa) of the cover glass,
   $t_1$ is a thickness (mm) of the cover glass,
   $E_2$ is a Young's modulus (GPa) of the frame,
   $I_2$ is a moment of inertia of area (mm$^4$) of the frame,
   $E_3$ is an elastic modulus (MPa) of the adhesive layer, and
   W is a value obtained by dividing an area (cm$^2$) of the adhesive layer by a length (cm) of the curved portion along the main surface in a direction orthogonal to a bending axis.

11. The glass article production method according to claim 9 or 10, further comprising:
    a step of chemically strengthening the cover glass after the step of forming the cover glass.

12. A display device production method, comprising:
    a step of attaching, to a display, the glass article produced by the glass article production method according to claim 9 or 10, thereby producing a display device.

[FIG. 1]

[FIG. 2]

[FIG. 3A]

[FIG. 3B]

[FIG. 4]

[FIG. 5]

EP 4 567 008 A1

[FIG. 6]

[FIG. 7]

24

[FIG. 8]

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

## INTERNATIONAL SEARCH REPORT

| International application No. |
|---|
| **PCT/JP2023/027972** |

| A. | CLASSIFICATION OF SUBJECT MATTER |
|---|---|

*C03B 23/023*(2006.01)i; *C03C 21/00*(2006.01)i; *C03C 27/04*(2006.01)i; *G09F 9/00*(2006.01)i; *G09F 9/30*(2006.01)i
FI:  C03B23/023; C03C21/00 101; C03C27/04 D; G09F9/00 302; G09F9/00 338; G09F9/30 308A

According to International Patent Classification (IPC) or to both national classification and IPC

| B. | FIELDS SEARCHED |
|---|---|

Minimum documentation searched (classification system followed by classification symbols)

C03B23/023-23/035; C03C21/00; C03C27/04; G09F9/00-9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-530901 A (CORNING INCORPORATED) 04 July 2022 (2022-07-04) | 9, 11-12 |
|  | claims, paragraphs [0013]-[0014], [0040]-[0041] |  |
| A |  | 1-8, 10 |
| A | JP 2022-505220 A (CORNING INCORPORATED) 14 January 2022 (2022-01-14) | 1-12 |
|  | entire text |  |
| A | JP 2022-509987 A (CORNING INCORPORATED) 25 January 2022 (2022-01-25) | 1-12 |
|  | entire text |  |
| P, A | JP 2022-159207 A (CORNING INCORPORATED) 17 October 2022 (2022-10-17) | 1-12 |
|  | entire text |  |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

## INTERNATIONAL SEARCH REPORT
### Information on patent family members

| International application No. |
| --- |
| **PCT/JP2023/027972** |

| Patent document cited in search report | | | Publication date (day/month/year) | Patent family member(s) | | | Publication date (day/month/year) |
| --- | --- | --- | --- | --- | --- | --- | --- |
| JP | 2022-530901 | A | 04 July 2022 | WO | 2020/227043 | A1 | |
| | | | | claims, paragraphs [0022]-[0023], [0049]-[0050] | | | |
| | | | | US | 2022/0204381 | A1 | |
| | | | | EP | 3962871 | A1 | |
| | | | | CN | 213266252 | U | |
| | | | | CN | 113825730 | A | |
| | | | | KR | 10-2022-0004200 | A | |
| JP | 2022-505220 | A | 14 January 2022 | WO | 2020/081930 | A1 | |
| | | | | entire text | | | |
| | | | | US | 2022/0001650 | A1 | |
| | | | | EP | 3867057 | A1 | |
| | | | | CN | 212924891 | U | |
| | | | | CN | 112969579 | A | |
| | | | | TW | 202033351 | A | |
| JP | 2022-509987 | A | 25 January 2022 | WO | 2020/112435 | A1 | |
| | | | | entire text | | | |
| | | | | US | 2022/0024179 | A1 | |
| | | | | EP | 3887206 | A1 | |
| | | | | CN | 213501782 | U | |
| | | | | CN | 113226857 | A | |
| | | | | KR | 10-2021-0097747 | A | |
| JP | 2022-159207 | A | 17 October 2022 | US | 2022/0324201 | A1 | |
| | | | | entire text | | | |
| | | | | EP | 4067069 | A1 | |
| | | | | CN | 115140955 | A | |
| | | | | KR | 10-2022-0136284 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6941930 B

- JP 2022123808 A